# EUROPEAN PATENT SPECIFICATION

(11) **EP 3 783 069 B1**
(45) Date of publication and mention of the grant of the patent: **15.12.2021**
(21) Application number: 19192287.1
(22) Date of filing: 19.08.2019
(51) Int. Cl.: C09C 1/62, C09C 1/64, C08K 3/08, C08K 3/013

(54) **COMPOSITION CONTAINING 3D-SHAPED METAL EFFECT PIGMENTS, AND METHOD FOR PRODUCING SAID PIGMENTS**
ZUSAMMENSETZUNG ENTHALTEND 3D-METALLEFFEKTPIGMENTE UND VERFAHREN ZUR HERSTELLUNG DERSELBEN
COMPOSITION CONTENANT DES PIGMENTS À EFFET MÉTALLIQUE EN FORME 3D ET PROCÉDÉ DE PRODUCTION DE CES PIGMENTS

(43) Date of publication of application: 24.02.2021
(73) Proprietor: Technische Universität Berlin, 10623 Berlin (DE)
(72) Inventor: Demski, Nils Maximilian, 14055 Berlin (DE); Oberschmidt, Dirk, 16515 Oranienburg (DE)
(74) Representative: Bittner, Thomas L.

(56) References cited:
- WO-A1-2006/041658
- US-A1- 2012 235 075
- SUSUMU ONAKA: "Superspheres: Intermediate Shapes between Spheres and Polyhedra", SYMMETRY, vol. 4, no. 3, 1 September 2012 (2012-09-01), pages 336-343, XP055663345, ISSN: 2073-8994, DOI: 10.3390/sym4030336

## Description

The present disclosure refers to a composition, metal effect pigments, and a method for metal effect pigments.

### Background

Metal effect pigments or particles are applied in different applications for producing products showing a metal effect appearance. For example, metal effect pigments or particles may be contained in painting materials or plastic materials to be processed in injecting molding. Metal effect pigments are disclosed, for example, in the documents US 2008 / 0318012 A1 and US 2011 / 0094412 A1.

Metal effect pigments or particles are referred to in the European standard IN ISO 18451-1 (for example, version September 2017).

Document US 2012 / 235075 A1 discloses a solvent-based ink compositions which can be used for ink jet printing in a variety of applications. In particular, the embodiments disclosed are directed to magnetic inks having desirable ink properties. The ink of the embodiments disclosed comprises magnetic nanoparticles that are coated with various materials to prevent the exposure of the nanoparticles to oxygen, and provides robust prints.

In document WO 2006 / 041658 A1 an encapsulated metallic-look pigment is disclosed, as well as methods to prepare, and uses thereof. Also disclosed are injection molded articles comprising a thermoplastic and the encapsulated metallic-look pigment which show improved weld lines over injection molded articles comprising a thermoplastic and conventional metallic-look pigments.

The article by Susumu Onaka: "Superspheres: Intermediate Shapes between Spheres and Polyhedra" in vol. 4, no. 3 of "symmetry" on pages 336 to 343 published on 3 July 2012 discloses small crystalline precipitates often formed in alloys and having intermediate shapes between spheres and polyhedra.

### Summary

It is an object of the present disclosure to provide a composition, metal effect pigments, and a method for producing metal effect pigments which allow for improved metal pigment effect.

For solving the object, a composition containing a base material and metal effect pigments according to claim 1 is provided. Further, metal effect pigments and a method for producing metal effect pigments according to claims 8 and 9, respectively, are provided. Embodiments are the subject of dependent claims.

According to an aspect, a composition containing a base material and metal effect pigments contained in the base material, wherein the metal effect pigments are provided with a three dimensional shape selected from the following group: cube, pyramid having triangular outer surfaces, and tetrahedron.

According to another aspect, metal effect pigments are provided, the metal pigments having a three dimensional shape selected from the following group: cube, pyramid having triangular outer surfaces, and tetrahedron.

According to still another aspect, a method for producing metal effect pigments is provided, the method comprising producing metal effect pigments by processing a material, wherein the metal effect pigments are produced with a three dimensional shape selected from the following group: cube, pyramid having triangular outer surfaces, and tetrahedron.

Edges of the three dimensional shape are provided with an edge length of 20 µm to less than 200 µm.

In an embodiment, the metal effect pigments or particles are provided as tetrahedron. The tetrahedron, also known as a triangular pyramid, is a polyhedron composed of four triangular faces, six straight edges, and four vertex corners. The tetrahedron is one kind of pyramid, which is a polyhedron with a flat polygon base and triangular faces connecting the base to a common point. In the case of a tetrahedron the base is a triangle (any of the four faces can be considered the base), so a tetrahedron is also known as a "triangular pyramid". Compared to other three dimensional shapes proposed here, the tetrahedron is provided with minimized volume.

In different embodiments, such three dimensional shape of the metal effect particles being one of cube, pyramid and tetrahedron may be distorted to at least some extend. For example, height of the tetrahedron may be lowered by up to 70% compared to the height of a "perfect" tetrahedron shape.

The base material may be one of a painting and a coating material. The metal effect pigments or particles are contained in a material suitable for painting or surface coating, for example by spraying. Prior to actual processing for painting or coating the composition may be pre-processed or prepared, for example by adding one or more additives.

The base material may be a plastic material suitable for processing in an injection molding or an extrusion process. In another embodiment, the base material may be a plastic material suitable for processing in hot embossing process or an extrusion process. The metal effect pigments or particles are contained in the plastic material which may be processed by at least one of the processes. Prior to actual processing the composition may be pre-processed or prepared, for example by adding one or more additives.

The edges of the three dimensional shape are provided with an edge or side length of 20 µm to less than 200µm.

The edges of the three dimensional shape may be provided with an edge length of 20µm 150µm, preferably with an edge length of 20µm to 100µm.

The metal effect pigments may be provided with a regular tetrahedron shape. A regular tetrahedron is one in which all four faces are equilateral triangles. In a regular tetrahedron, all faces are the same size and shape (congruent) and all edges are the same length.

The metal effect pigments are made of a material selected from the following group: aluminum, zinc, tin, copper and an alloy of such materials.

The metal effect pigments may have with a core made of a polymer material, wherein the core is provided with a surface metal coating. The metal may be made of a material selected from the following group: aluminum, zinc, tin, copper and an alloy of such materials.

With respect to the method for producing the metal effect pigments, the producing may comprise applying at least one process selected from the following group: cold forming, solid forming such as rolling or pressing, casting, and machining.

For example, the casting may comprise melting the metal or the polymer material and introduce the melted metal / polymer material in a plurality of cavities provided on a casting tool. Following, the melt is cooled and the metal effect pigments or particles are separated from the casting tool. In case of the polymer material a core or core body is produced by the casting. The cavities or recesses of the casting tool are having a three dimensional shape selected from the group of cube, pyramid having triangular outer surfaces, and tetrahedron.

In case machining is applied for producing the metal effect particles, a machining tool having working tips provided adjacent to recesses on a working surface of the machining tool may be used.

The method may further comprise: providing a metal foil made of the metal material, and producing the metal effect pigments by processing the metal foil. Alternatively, a bulk material may be provided.

The method may comprise providing a foil or bulk material made of aluminum.

The method may further comprise rolling the metal material such as the metal foil between rollers, wherein at least one of the rollers is provided with a micro surface structure comprising recesses having a three dimensional shape selected from the following group: cube, pyramid having triangular outer surfaces, and tetrahedron. Separated metal effect pigments or particles are produced by the cold forming process. An anti-stick or a release agent may be applied to the surface of the roller(s) provided with the recesses for supporting easy release of the metal effect particles from the roller(s). For separating the metal effect pigments from the roller a separation tool may be used. The separation tool may be provided with a tool element for picking up the metal effect pigments for release. An adhesive agent may be applied to the tool element for more easily picking up the metal effect pigments from the roller. Following, it may be foreseen to separate the metal effect particles from the tool element in a bath of a solution agent. For example, the tool element may be provided with a belt or a conveyor belt configured for picking up the metal effect particles from the roller and transporting the pigments to the bath.

The method may comprise machining the metal material with a revolving tool, wherein the revolving tool is provided with a micro surface structure comprising recesses and / or tips having a three-dimensional shape selected from the following group: cube, pyramid having triangular outer surfaces, and tetrahedron.

Separated metal effect pigments or particles are produced by the cold forming process. An anti-stick or a release agent may be applied to the surface of the roller(s) provided with the recesses for supporting easy release of the metal effect particles from the roller(s). For separating the metal effect pigments from the roller a separation tool may be used. The separation tool may be provided with a tool element for picking up the metal effect pigments for release. An adhesive agent may be applied to the toll element for more easily picking up the metal effect pigments from the roller. Following, it may be foreseen to separate the metal effect particles from the tool element in a bath of a solution agent. For example, the toll element may be provided with a belt or a conveyor belt configured for picking up the metal effect particles from the roller and transporting the pigments to the bath.

For separation, a brush, ultrasound excitation and / or waterjet may also be used or applied.

In the method the processing of the material may comprise producing a core made of a polymer material and having a three dimensional shape selected from the group cube, pyramid having triangular outer surfaces, and tetrahedron; and applying a metal surface coating to the core.

With respect to the metal effect pigments and the method for producing, the aspects disclosed above for the composition may apply *mutatis mutandis.*

### Description of further embodiments

Following, embodiments, by way of example, are described with reference to figures. In the figures show:
- Fig. 1: a schematic representation of different three-dimensional shapes for metal effect pigments;
- Fig. 2: a schematic representation with respect to a method for producing metal effect pigments by applying solid forming;
- Fig. 3: a schematic representation of a method for producing metal effect pigments by applying solid forming using a separation tool;
- Fig. 4: a schematic representation for producing a roller to be used in the method for producing metal effect pigments;
- Fig. 5: a schematic representation for a method of producing metal effect pigments by applying casting;
- Fig. 6: a schematic representation for a method for producing metal effect particles by applying machining;
- Fig. 7: a schematic representation for a further method for producing metal effect particles by applying machining;
- Fig. 8: a schematic representation for another method for producing metal effect particles by applying machining; and
- Fig. 9: experimental results for the method of producing metal effect pigments.

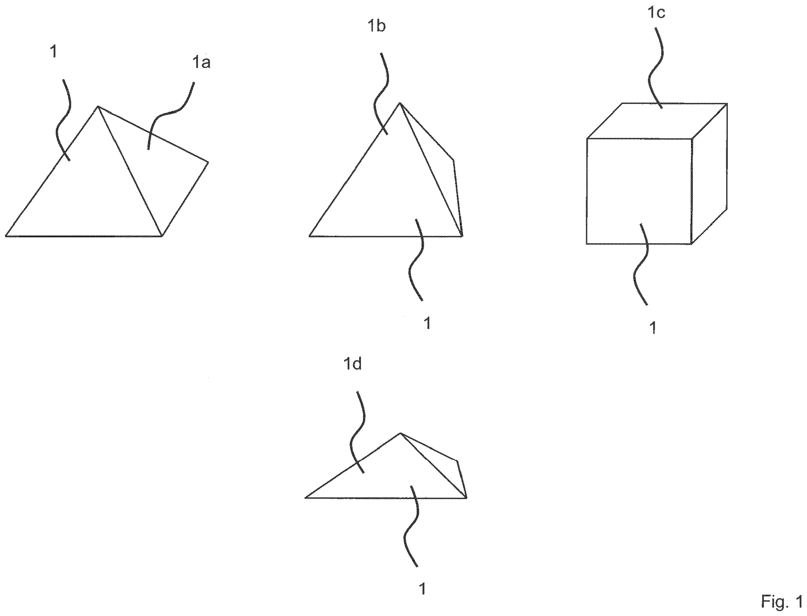

Fig. 1 shows a schematic representation of different three dimensional shapes which may be provided for metal effect particles. According to Fig. 1, the metal effect particles may be provided with one of the following three-dimensional shapes: cube (1c), pyramid (1a) and tetrahedron (1b). Such three dimensional shape being one of cube, pyramid and tetrahedron may be distorted to at least some extent (1d). For example, height of the tetrahedron may be lowered by up to 70% compared to the height of a "perfect" tetrahedron shape.

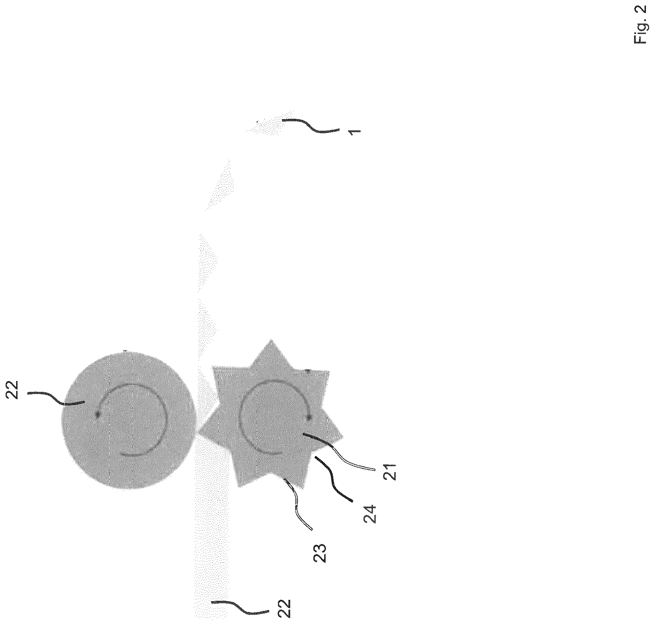

Fig. 2 shows a schematic representation with respect to a method for producing the metal effect particles 1 having one of the three dimensional shapes depicted in Fig. 1. The metal effect pigments 1 are produced from a metal material 20 which, according the example shown, is provided as a metal foil. The metal material 20 is rolled by rollers 21, 22 in a solid forming process. The roller 21 is provided with a structured surface 23 having recesses 24 provided with a three dimensional shape selected from the following group: cube, pyramid, and tetrahedron. As a result of the rolling process the separated metal effect particles 1 are generated.

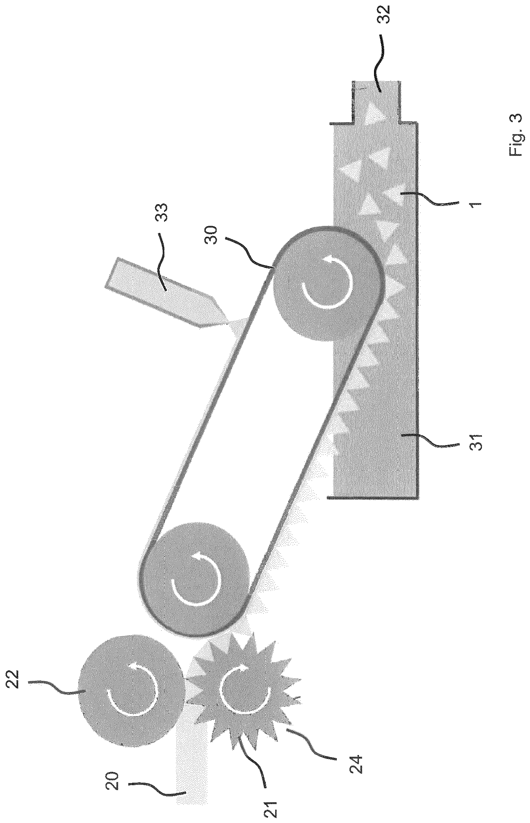

Fig. 3 shows a schematic representation for another example for producing the metal effect pigments 1 by solid forming applying rolling. The metal effect pigments 1 are separated from the roller 21 by a conveyor belt 30, which is provided with an adhesive agent on its outer surface. The adhesive agent is applied to the surface of the conveyor belt 30 by a spraying device 33. The conveyor belt 30 adheres to the metal effect pigment particles 1 and separates them from the roller 21 and transports the metal effect pigment particles 1 to a bath 31 made of a solution agent. In the bath 31 the metal effect pigments 1 are separated from the conveyor belt 30. Following, the metal effect pigments 1 may be provided to further processing such as filtering through an output 32 of the bath 31.

In an alternative embodiment (not shown), the metal effect pigments 1 may be separated from the roller 21 by applying a different separation tool such as a brush tool for brushing out the metal effect pigments 1 from the recesses on the roller 21.

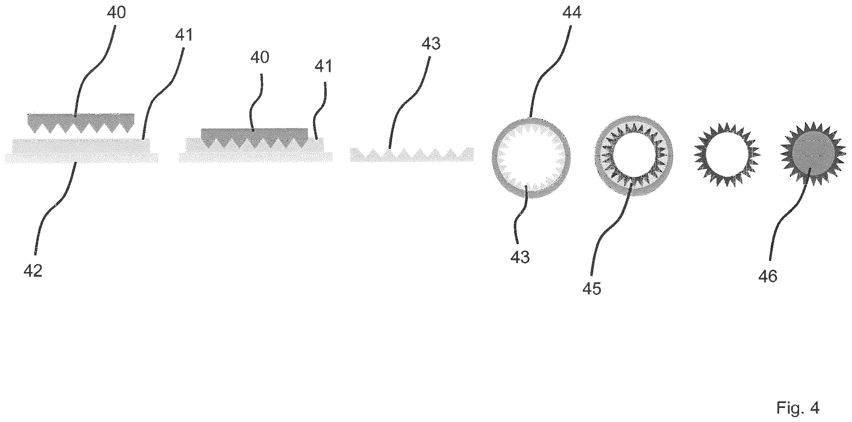

Fig. 4 shows a schematic representation for a process of producing the roller 21. A master structure 40 which comprises the positive of the structure to be gained is immerged into uncured polymer material 41 on a transparent base plate 42. The polymer material 41 is cured and separated from the master structure 40 to manufacture the negative 43 of the structure to be gained. This negative 43 is inserted into a tube 44 so that contact is established between the inner wall of the tube 44 and the polymer negative 43. The polymer negative 43 is coated with a layer of metal, which is then used as a base to thicken the structure by plating. After plating, a solid tube of metal 45 with a microstructure on its outer surface is existing. This solid tube 45 is filled with a supporting material 46.

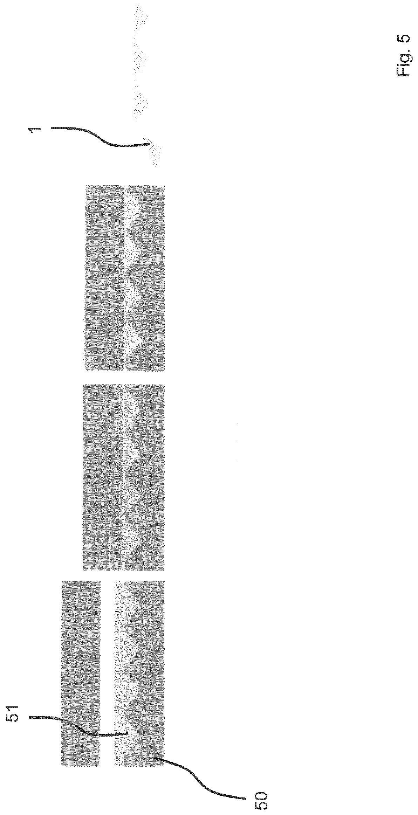

Fig. 5 shows a schematic representation for another method for producing the metal effect pigments or particles 1, the method applying casting. A metal material is melted and introduced in a casting tool 50 provided with recesses 51 having a three-dimensional shape such as cube, pyramid or tetrahedron. Following according to Fig. 5, the melted metal is pressed and cooled. Subsequently, the single metal effect pigments 1 are separated from the casting tool 50.

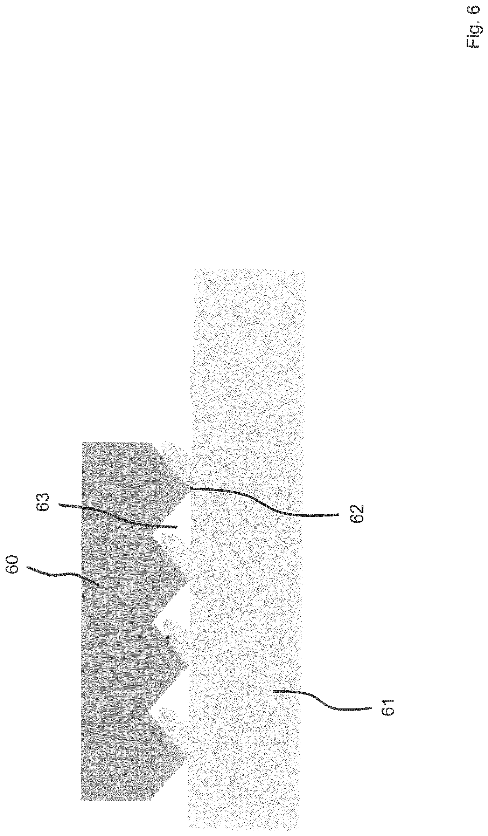

Still another example of a method for producing the metal effect pigments 1 is shown in Fig. 6. A machining tool 60 is applied to a metal material 61 for producing the metal effect pigments 1. The machining tool 60 comprising either tool tips 62 located adjacent to recesses 63, or cavities, having a three dimensional shape selected from the following group: cube, pyramid, and tetrahedron. In operation, the material is forced into the recesses 63 if there is a relative movement of the machining tool 60 and the metal material 61. This relative movement may be accomplished by either pressing the machining tool 60 into the metal material 61 so that the metal material 61 is deformed plastically and forced to flow towards the edges of the machining tool 60. Another way to accomplish relative movement of the machining tool 60 and the metal material 61 may be accomplished if the machining tool 60 is slided over the metal material 61 while being subjected to normal load so that the microstructure forces the top layer of the metal material 61 into the desired shape selected from the following group: cube, pyramid, and tetrahedron, followed by separation by shear.

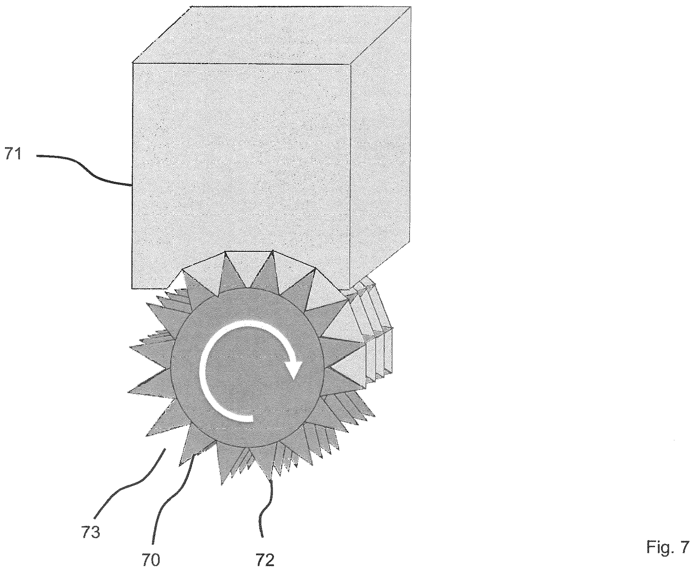

Another example of a method for producing the metal effect pigments 1 is depicted in Fig. 7. A machining tool 70 is applied to a metal bulk material 71 for producing the metal effect pigments 1. The machining tool 70 is provided with either tool tips 72 located adjacent to recesses 73, or cavities, having a three dimensional shape selected from the following group: cube, pyramid, and tetrahedron. Relative movement between the machining tool 70 and the metal bulk material 71 may be accomplished by pressing the machining tool 70 onto the bulk material 71 while rotating the tool.

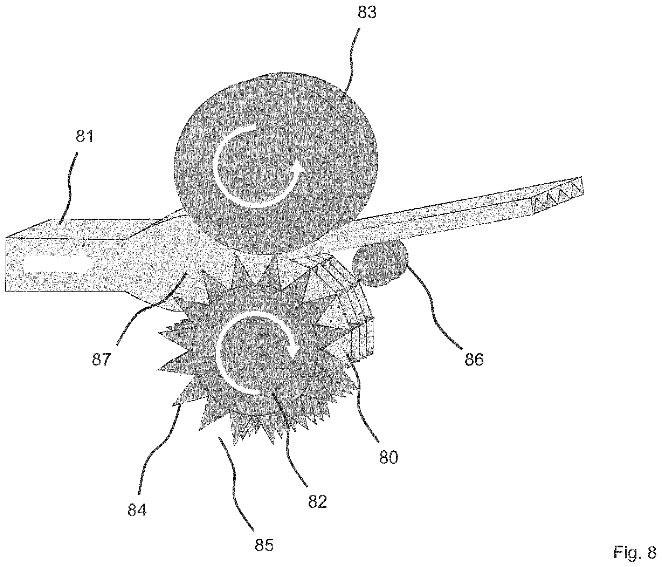

Still another example of a method for producing the metal effect pigments 1 is depicted in Fig. 8. The metal effect pigments 80 are produced from a metal material 81 which, according the example shown, is provided as a sheet metal. The metal material 81 is rolled by rollers 82, 83 in a solid forming process. Roller 82 is provided with a structured surface featuring either tool tips 84 located adjacent to recesses 85, or cavities, having a three dimensional shape selected from the following group: cube, pyramid, and tetrahedron. Due to the movement of the metal sheet 81 being slower in the relation to the surface speed of the roller 82 in an infeed zone 87, the metal between the tool tips 84 is sheared off the metal sheet 81. This sheared off metal resting in the recesses 85 between the tool tips 84, having a three dimensional shape selected from the following group: cube, pyramid, and tetrahedron, is the effect pigment. The remaining metal sheet is supported by a support roll 86 in order to be lifted off the roller 82 after leaving the rollers 82, 83.

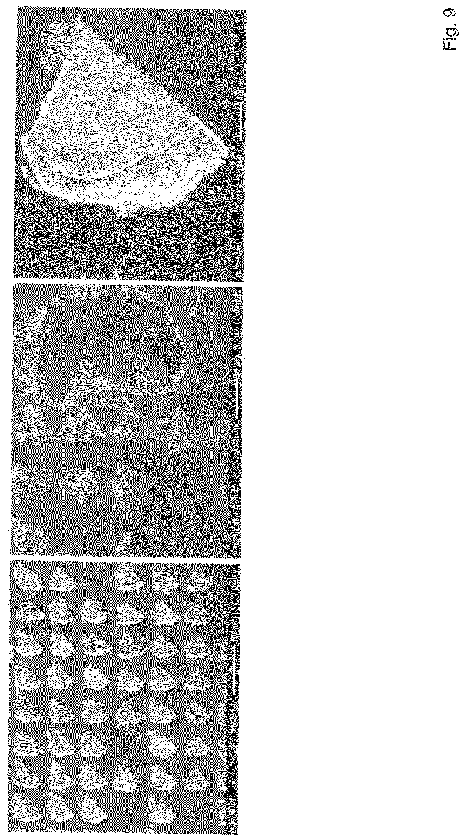

Fig. 9 shows experimental results for the metal effect pigments 1 produced. These are tetrahedron shaped micro particles with an edge length of about 50 µm. They were produced by machining with a structured tool.

The features disclosed in this specification, the figures and / or the claims may be material for the realization of various embodiments, taken in isolation or in various combinations thereof.

## Claims

1. A composition, containing a base material and metal effect pigments (1) contained in the base material, wherein
- the metal effect pigments (1) are provided with a three dimensional shape selected from the following group: cube, pyramid having triangular outer surfaces, and tetrahedron; and
- edges of the three dimensional shape are provided with an edge length of 20 µm to less than 200 µm.

2. The composition according to claim 1, wherein the base material is one of a painting and a coating material.

3. The composition according to claim 1, wherein the base material is a plastic material suitable for processing in an injection molding or an extrusion process.

4. The composition according to claim 1, wherein edges of the three dimensional shape are
provided with an edge length of 20µm to 150µm, preferably with an edge length of 20µm to 100µm.

5. The composition according to at least one of the preceding claims, wherein the metal effect pigments (1) are provided with a regular tetrahedron shape.

6. The composition according to at least one of the preceding claims, wherein the metal effect pigments (1) are made of a material selected from the following group: aluminum, zinc, tin, copper and an alloy of such materials.

7. The composition according to at least one of the claims 1 to 5, wherein the metal effect pigments (1) are having a core made of a polymer material, wherein the core is provided with a surface metal coating.

8. Metal effect pigments (1) provided with a three dimensional shape selected from the following group: cube, pyramid having triangular outer surfaces, and tetrahedron; wherein edges of the three dimensional shape are provided with an edge length of 20 µm to less than 200 µm.

9. A method for producing metal effect pigments (1), comprising producing metal effect pigments (1) by processing a material, wherein
- the metal effect pigments (1) are produced with a three dimensional shape selected from the following group: cube, pyramid having triangular outer surfaces, and tetrahedron; and
- edges of the three dimensional shape are produced with an edge length of 20 µm to 200 µm.

10. The method of claim 9, wherein the producing comprises applying at least one process selected from the following group: cold forming, solid forming such as rolling or pressing, casting, and machining.

11. The method of claim 9 or 10, further comprising
- providing a metal foil made of the material; and
- producing the metal effect pigments (1) by processing the metal foil.

12. The method of claim 11, further comprising providing a foil material made of aluminum.

13. The method of at least one claims 10 to 12, further comprising rolling the material between rollers, wherein at least one of the rollers is provided with a micro surface structure comprising recesses having a three dimensional shape selected from the following group: cube, pyramid having triangular outer surfaces, and tetrahedron.

14. The method of at least one claims 9 to 13, wherein the processing of the material comprises:
- producing a core made of a polymer material and having a three dimensional shape selected from the group cube, pyramid having triangular outer surfaces, and tetrahedron;
- applying a metal surface coating to the core.

## Patentansprüche

1. Zusammensetzung, die ein Basismaterial und Metalleffektpigmente (1), die in dem Basismaterial enthalten sind, enthält, wobei
- die Metalleffektpigmente (1) mit einer dreidimensionalen Gestalt ausgewählt aus der folgenden Gruppe ausgestattet sind: Würfel, Pyramide, die dreieckige Außenflächen aufweist, und Tetraeder; und
- Kanten der dreidimensionalen Gestalt mit einer Kantenlänge von 20 µm bis weniger als 200 µm ausgestattet sind.

2. Zusammensetzung nach Anspruch 1, wobei das Basismaterial eines von einem Anstrich- und einem Beschichtungsmaterial ist.

3. Zusammensetzung nach Anspruch 1, wobei das Basismaterial ein Kunststoffmaterial ist, das für das Verarbeiten durch ein Spritzgieß- oder ein Extrusionsverfahren geeignet ist.

4. Zusammensetzung nach Anspruch 1, wobei die Kanten der dreidimensionalen Gestalt mit einer Kantenlänge von 20 µm bis 150 µm, bevorzugt mit einer Kantenlänge von 20 µm bis 100 µm ausgestattet sind.

5. Zusammensetzung nach mindestens einem der vorhergehenden Ansprüche, wobei die Metalleffektpigmente (1) mit einer regelmäßigen Tetraedergestalt ausgestattet sind.

6. Zusammensetzung nach mindestens einem der vorhergehenden Ansprüche, wobei die Metalleffektpigmente (1) aus einem Material ausgewählt aus der folgenden Gruppe hergestellt sind: Aluminium, Zink, Zinn, Kupfer und einer Legierung derartiger Materialien.

7. Zusammensetzung nach mindestens einem der Ansprüche 1 bis 5, wobei die Metalleffektpigmente (1) einen Kern aufweisen, der aus einem Polymermaterial hergestellt ist, wobei der Kern mit einer Oberflächenmetallbeschichtung ausgestattet ist.

8. Metalleffektpigmente (1), die mit einer dreidimensionalen Gestalt ausgewählt aus der folgenden Gruppe ausgestattet sind: Würfel, Pyramide, die dreieckige Außenflächen aufweist, und Tetraeder; wobei Kanten der dreidimensionalen Gestalt mit einer Kantenlänge von 20 µm bis weniger als 200 µm ausgestattet sind.

9. Verfahren für die Herstellung von Metalleffektpigmenten (1), umfassend das Herstellen von Metalleffektpigmenten (1) durch Verarbeiten eines Materials, wobei
- die Metalleffektpigmente (1) mit einer dreidimensionalen Gestalt ausgewählt aus der folgenden Gruppe hergestellt sind: Würfel, Pyramide, die dreieckige Außenflächen aufweist, und Tetraeder; und
- Kanten der dreidimensionalen Gestalt mit einer Kantenlänge von 20 µm bis 200 µm hergestellt sind.

10. Verfahren nach Anspruch 9, wobei die Herstellung Anwenden mindestens eines Verfahrens ausgewählt aus der folgenden Gruppe umfasst: Kaltformen, Feststoffformen wie etwa Walzen oder Pressen, Gießen und maschinell Bearbeiten.

11. Verfahren nach Anspruch 9 oder 10, ferner Folgendes umfassend
- Bereitstellen einer Metallfolie, die aus dem Material hergestellt ist; und
- Herstellen der Metalleffektpigmente (1) durch Verarbeiten der Metallfolie.

12. Verfahren nach Anspruch 11, ferner umfassend das Bereitstellen eines Folienmaterials, das aus Aluminium hergestellt ist.

13. Verfahren nach mindestens einem der Ansprüche 10 bis 12, ferner Walzen des Materials zwischen Walzen umfassend, wobei mindestens eine der Walzen mit einer Mikrooberflächenstruktur ausgestattet ist, die Vertiefungen umfasst, die eine dreidimensionale Gestalt ausgewählt aus der folgenden Gruppe aufweisen: Würfel, Pyramide, die dreieckige Außenflächen aufweist, und Tetraeder.

14. Verfahren nach mindestens einem der Ansprüche 9 bis 13, wobei das Verarbeiten des Materials Folgendes umfasst:
- Herstellen eines Kerns, der aus einem Polymermaterial hergestellt ist und eine dreidimensionale Gestalt aufweist ausgewählt aus der Gruppe von Würfel, Pyramide, die dreieckige Außenflächen aufweist, und Tetraeder;
- Aufbringen einer Metalloberflächenbeschichtung auf den Kern.

## Revendications

1. Composition, contenant un matériau de base et des pigments à effet métallique (1) contenus dans le matériau de base, dans laquelle
- les pigments à effet métallique (1) sont fournis avec une forme tridimensionnelle choisie parmi le groupe suivant : un cube, une pyramide ayant des surfaces extérieures triangulaires, et un tétraèdre ; et
- des bords de la forme tridimensionnelle sont fournis avec une longueur de bord comprise entre 20 µm et inférieure à 200 µm.

2. Composition selon la revendication 1, dans laquelle le matériau de base est l'un parmi un matériau de peinture et un matériau de revêtement.

3. Composition selon la revendication 1, dans laquelle le matériau de base est un matériau plastique approprié pour le traitement dans un moulage par injection ou un procédé d'extrusion.

4. Composition selon la revendication 1, dans laquelle les bords de la forme tridimensionnelle sont fournis avec une longueur de bord comprise entre 20 µm et 150 µm, de préférence avec une longueur de bord comprise entre 20 µm et 100 µm.

5. Composition selon l'une quelconque des revendications précédentes, dans laquelle les pigments à effet métallique (1) sont fournis avec une forme tétraédrique régulière.

6. Composition selon l'une quelconque des revendications précédentes, dans laquelle les pigments à effet métallique (1) sont fabriqués d'un matériau choisi dans le groupe suivant : l'aluminium, le zinc, l'étain, le cuivre et un alliage de ces matériaux.

7. Composition selon l'une quelconque des revendications 1 à 5, dans laquelle les pigments à effet métallique (1) ont un noyau fabriqué d'un matériau polymérique, dans laquelle le noyau est fourni avec un revêtement métallique de surface.

8. Pigments à effet métallique (1) fournis avec une forme tridimensionnelle choisie dans le groupe suivant : un cube, une pyramide ayant des surfaces externes triangulaires, et un tétraèdre ; dans lesquels des bords de la forme tridimensionnelle sont fournis avec une longueur de bord comprise entre 20 µm et inférieure à 200 µm.

9. Procédé de production de pigments à effet métallique (1), comprenant la production des pigments à effet métallique (1) par traitement d'un matériau, dans lequel
- les pigments à effet métallique (1) sont produits avec une forme tridimensionnelle choisie parmi le groupe suivant : un cube, une pyramide ayant des surfaces extérieures triangulaires, et un tétraèdre ; et
- des bords de la forme tridimensionnelle sont produits avec une longueur de bord comprise entre 20 µm et inférieure à 200 µm.

10. Procédé selon la revendication 9, dans lequel la production comprend l'application d'au moins un procédé choisi dans le groupe suivant : le formage à froid, le formage solide tel que le laminage ou le pressage, le moulage et l'usinage.

11. Procédé selon la revendication 9 ou la revendication 10, comprenant en outre
- l'apport d'une feuille métallique faite du matériau ; et
- la production des pigments à effet métallique (1) par traitement de la feuille métallique.

12. Procédé selon la revendication 11, comprenant en outre la fourniture d'un matériau en feuille fait d'aluminium.

13. Procédé selon l'une quelconque des revendications 10 à 12, comprenant en outre le laminage du matériau entre des rouleaux, dans lequel au moins un des rouleaux est fourni avec une structure de micro-surface comprenant des évidements ayant une forme tridimensionnelle choisie dans le groupe suivant : un cube, une pyramide ayant des surfaces extérieures triangulaires, et un tétraèdre.

14. Procédé selon l'une quelconque des revendications 9 à 13, dans lequel le traitement du matériau comprend :
- la production d'un noyau fabriqué d'un matériau polymérique et ayant une forme tridimensionnelle choisie dans le groupe avec le cube, la pyramide ayant des surfaces extérieures triangulaires, et le tétraèdre ;
- l'application d'un revêtement de surface métallique sur le noyau.
